Europäisches Patentamt

European Patent Office

Office européen des brevets

(19)

(11) Veröffentlichungsnummer : **0 139 033**
**B1**

# (12) EUROPÄISCHE PATENTSCHRIFT

(45) Veröffentlichungstag der Patentschrift :
06.07.88

(21) Anmeldenummer : 83110527.5

(22) Anmeldetag : 21.10.83

(51) Int. Cl.⁴ : **H 04 L 27/20**, H 04 L 27/04

(54) Digitales RF-Direktmodulationsverfahren und Schaltungsanordnung zu seiner Durchführung.

(43) Veröffentlichungstag der Anmeldung :
02.05.85 Patentblatt 85/18

(45) Bekanntmachung des Hinweises ·auf die Patenterteilung : 06.07.88 Patentblatt 88/27

(84) Benannte Vertragsstaaten :
AT CH DE LI NL

(56) Entgegenhaltungen :
EP-A- 0 034 973
US-A- 3 973 201
PATENTS ABSTRACTS OF JAPAN, Band 6, Nr. 259(E-
149)(1137), 17. Dezember 1982 & JP - A - 57 155 865
(NIPPON DENKI K.K.) 27.09.1982
WISSENSCHAFTLICHE BERICHTE AEG-TELEFUN-
KEN, Band 51, Nr. 4/5, 1978, Seiten 212-224, Berlin,
DE, S. BÖRNER: "Modems für Digitalübertragung im
Burstbetrieb über Nachrichtensatelliten"

(73) Patentinhaber : ANT Nachrichtentechnik GmbH
Gerberstrasse 33
D-7150 Backnang (DE)

(72) Erfinder : Ehrlinger, Wolfgang, Dipl.-Ing.
Im Wiesengrund 13
D-7141 Grossbottwar 3 (DE)
Erfinder : Glauner, Martin, Dipl.-Ing.
Im Wiesengrund 13
D-7141 Grossbottwar 3 (DE)

## Beschreibung

Die vorliegende Erfindung betrifft ein digitales RF-Direktmodulationsverfahren zur Erzeugung eines bandbegrenzten und Intersymbol-Interferenz (ISI)-freien amplitudenmodulierten oder quadratur-amplitudenmodulierten oder phasenumgetasteten Signals, wobei mindestens ein eine Nachricht enthaltendes pulsamplitudenmoduliertes Signal im Basisband vorgefiltert und mit diesem vorgefilterten Signal unmittelbar ein Radiofrequenz (RF)-Oszillatorsignal moduliert wird.

Zur Funkübertragung bei Richtfunk und Raumfahrtanwendungen werden digitale amplituden und/oder phasenmodulierte Trägersignale verwendet, beispielsweise PSK mit 2 oder 4 oder 8 Phasenzuständen oder 16 QAM mit 16 Phasenzuständen.

Das technische Hauptproblem besteht darin, mit wirtschaftlich vertretbarem Aufwand im Zeit- und Frequenzbereich geeignet geformte, d. h. mit anderen Worten Intersymbol-Interferenz (ISI) freie und bandbegrenzte Signale zu erzeugen.

Zur Lösung dieses Problems sind bisher zwei Wege bekannt.

1. Im Aufsatz « Modems für Digitalübertragung im Burtsbetrieb über Nachrichtensatelliten » in Wissenschaftliche Berichte, AEG-Telefunken 51 (1978) 415 von Siegfried Börner wird ein erstes Verfahren beschrieben. Dieses Verfahren beinhaltet folgendes :

Amplituden- oder Quadratur-Amplitudenmodulation (QAM) in Zwischenfrequenz (ZF)-Lage sorgfältiger Filterung im Basisband oder in der ZF-Lage sowie anschließend möglichst linearer Mischung in die Radiofrequenz (RF)-Lage sowie Verstärkung in hochlinearer teurer Leistungsstufe. Das Verfahren liefert nahezu ideale Trägersignale mit insbesonders optimaler Bandbegrenzung. Es kommt jedoch aus Aufwandsgründen nur für Richtfunkanwendungen bei höchsten Bitraten bzw. für Raumfahrtanwendungen in Frage.

2. Der zweite Weg ist beispielsweise in Wissenschaftliche Berichte, AEG-Telefunken 51 (1978) 4/5 von Just Dietrich Büchs, Wolfram Geidel und Roland Heer in dem Aufsatz :

« Übertragung digitaler Signale auf Richtfunkstrecken » beschrieben. Es handelt sich um eine direkte Phasenumtastung eines RF-Oszillators mit nachfolgender Bandbegrenzung in einem RF-Kanalweichenfilter. Das Verfahren ist wirtschaftlich, erlaubt jedoch nur PSK-Modulation mit abrupter (harter) Umtastung der Trägerphase ; der Modulator erzeugt ein unbegrenzt breites Spektrum, welches durch nachfolgende Filterung begrenzt werden muß. Dieses Verfahren hat daher folgende Nachteile :

a) Die sendeseitige Impulsformung ist grundsätzlich nicht optimal und führt zu einer Grunddegradation von ca. 0,7 dB.

b) Die erforderlichen RF-Filter verursachen erhebliche Dämpfungsverluste. Typisch bei 34 Mbit-Systemen in Frequenzbereichen zwischen 2 und 15 GHz sind 1,5 bis 3 dB.

c) Bei niedrigen Bitraten (2 Mbit/s) und hohen Übertragungsfrequenzen (18 GHz) ist eine « signalgerechte » Filterung unmöglich, denn die Filterbandbreite und damit der Abstand benachbarter RF-Träger müßte ein Vielfaches der Bitrate betragen. Dies bedeutet aber eine nicht tolerierbare Verschwendung von Frequenzband.

Aus der EP-A-0 034 973 ist ebenfalls ein Modulator bekannt, bei dem ein Hochfrequenzsignal direkt mittels symmetrischer Diodenmischer mit einem Digitalsignal moduliert wird. Ein mit niedrigen Verlusten arbeitender linearer PIN-Dioden Modulator ist z. B. in dem Patent Abstract of Japan, Band 6, Nr. 259, 17. Dez. 1982, und JP-A-57 155 865 beschrieben.

Der Erfindung liegt die Aufgabe zugrunde ein digitales RF-Direktmodulationsverfahren der eingangs genannten Art anzugeben, das mit geringem Aufwand die Erzeugung eines bandbegrenzten und Intersymbol Interferenz (ISI)-freien QAM oder PSK-Signal auch bei niedrigen Bitraten und hohen Übertragungsfrequenzen ermöglicht, ohne die nachteiligen bandbegrenzenden RF-Filter verwenden zu müssen.

Die Aufgabe wird gelöst wie im Kennzeichen des Anspruchs 1 beschrieben. Der Anspruch 2 gibt eine vorteilhafte Schaltungsanordnung zur Durchführung des erfundenen Verfahrens an.

Die oben geschilderten Nachteile der bandbegrenzenden RF-Filterung werden erfindungsgemäß dadurch vermieden, daß die optimale Impulsformung im Basisband ausgeführt wird und sich die RF-Selektion auf ein Oberwellenfilter beschränkt.

Von der Leistungsbilanz her erscheint der erfindungsgemäße Modulator deshalb ungünstig zu sein, weil das Trägersignal eine konstante Linie aufweist, in welcher ungefähr die Hälfte der RF-Leistung konzentriert ist. Da diese Linie keine Information trägt, bedeutet ihr Auftreten einen Leistungsverlust von ca. 3 dB. Aber dieser Verlust wird kompensiert durch optimale Impulsformung im Basisband und Wegfall der Dämpfung der RF-Filter. Der mit übertragene Träger kann empfangsseitig vorteilhaft zur kohärenten Demodulation des Signals verwendet werden.

Im folgenden sei die Erfindung am Beispiel einer 4 PSK-Modulation mit Hilfe von Figuren näher erläutert.

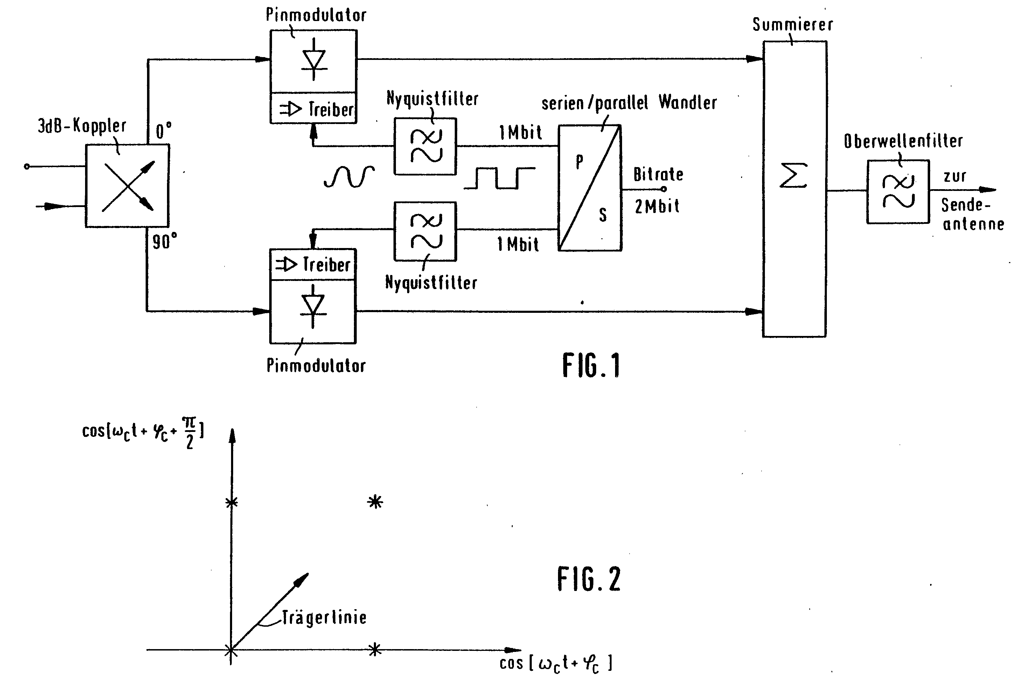

Figur 1 zeigt ein Blockschaltbild eines erfindungsgemäßen 4 PSK-Modulators.

Der unmodulierte Träger wird mit einem 3 dB Koppler 0°/90° phasenverschoben aufgeteilt. In jedem Zweig sitzt ein Pin-Dioden-Modulator, der im Prinzip ein steuerbares Dämpfungsglied mit geringer Phasendrehung darstellt.

Das die Nachricht enthaltende Basisband wird mit einem serien/parallel Wandler in zwei digitale Bitströme mit der halben Bitrate aufgeteilt. Jeder dieser Bitströme wird mit einem Nyquistfilter gefiltert und danach verstärkt und jeweils einem Pin-Dioden-Modulator zugeführt. Die beiden so-

mit amplitudenmodulierten Trägersignale werden einem Summierglied zugeführt. Das Summensignal wird mit einem Oberwellenfilter gefiltert und so der Sendeantenne zugeführt.

Grundsätzlich läßt sich die erfindungsgemäße Modulation auch mit anderen ähnlichen Schaltungen durchführen, bei denen einzelne der in Fig. 1 dargestellten Schaltungselemente vertauscht sind.

Figur 2 zeigt das Vektordiagramm des resultierenden 4 PSK-Signals, so wie es sich durch Momentanbetrachtung des Signals in den Mitten der Symbolintervalle ergibt.

**Patentansprüche**

1. Digitales RF-Direktmodulationsverfahren zur Erzeugung eines bandbegrenzten und Intersymbol-Interferenz (ISI)-freien amplitudenmodulierten oder quadratur-amplitudenmodulierten oder phasenumgetasteten Signals, wobei mindestens ein eine Nachricht enthaltendes Pulsamplitudenmoduliertes Signal im Basisband vorgefiltert und mit diesem vorgefilterten Signal unmittelbar ein Radiofrequenz (RF)-Oszillatorsignal moduliert wird, dadurch gekennzeichnet, daß das pulsamplitudenmodulierte Signal im Basisband so vorgefiltert wird, daß die erste Nyquistbedingung eingehalten wird, und daß die Modulation des Radiofrequenz (RF)-Oszillatorsignals mit Hilfe eines amplitudenlinear steuerbaren Dämpfungsgliedes durchgeführt wird.

2. Schaltungsanordnung zum Durchführen des Verfahrens nach Anspruch 1, die einen das Radiofrequenz (RF)-Oszillatorsignal in zwei um 90° gegeneinander phasenverschobene Radiofrequenzsignale aufteilenden Koppler, zwei Dioden-Modulatoren, denen je eins der zwei um 90° gegeneinander phasenverschobenen Radiofrequenzsignale und je ein über ein Filter geleitetes pulsamplitudenmoduliertes Signal zugeführt sind, und einen Summierer aufweist, der die aus den Dioden-Modulatoren austretenden modulierten Radiofrequenzsignale zu einem Signal zusammenfaßt, dadurch gekennzeichnet, daß die Dioden-Modulatoren als amplitudenlinear steuerbare Dämpfungsglieder ausgeführt sind, daß ein Serien/Parallel-Wandler vorhanden ist, der aus einem eine Nachricht enthaltenden pulsamplitudenmodulierten Signal die zwei pulsamplitudenmodulierten Signale bildet und daß die Filter, über die die pulsamplitudenmodulierten Signale geführt sind, Nyquistfilter sind.

**Claims**

1. A digital, direct RF modulation method of generating a bandwidth limited and intersymbol interference (ISI) free amplitude modulated or quadrature amplitude modulated or phase-shift keyed signal, wherein at least one pulse amplitude modulated signal in the base band containing a communication is prefiltered and a radio frequency (RF) oscillator signal is directly modulated with this prefiltered signal, characterized in that the pulse amplitude modulated signal in the base band is prefiltered in such a manner that the first Nyquist condition is maintained and the modulation of the radio frequency (RF) oscillator signal is performed with the aid of a linear amplitude controlled attenuation member.

2. A circuit arrangement for implementing the method of claim 1, including a coupler which divides the radio frequency (RF) oscillator signal into two mutually 90° phase shifted radio frequency signals, two diode modulators, each receiving one of the two mutually 90° phase shifted radio frequency signals and one pulse amplitude modulated signal supplied via a filter, and a summing member which combines the modulated radio frequency signals coming from the diode modulators into a signal, characterized in that the diode modulators are configured as linear amplitude controlled attenuation members ; a series/parallel converter is provided which form the two pulse amplitude modulated signals from a pulse amplitude modulated signal containing a communication and the filters which filter the pulse amplitude modulated signals are Nyquist filters.

**Revendications**

1. Procédé de modulation RF numérique directe pour générer un signal à bande limitée et exempt d'interférence intersymbole (ISI), signal qui est modulé en amplitude, à modulation d'amplitude déphasée en quadrature ou à modulation par manipulation de déphasage, procédé selon lequel au moins un signal à modulation d'impulsions en amplitude, contenant un message, et préfiltré dans la bande de base et selon lequel on module directement un signal d'oscillateur radiofréquence (RF) avec ce signal préfiltré, caractérisé en ce que le signal à modulation d'impulsions en amplitude est préfiltré dans la bande de base de manière que le premier critère de Nyquist soit respecté et en ce que la modulation du signal d'oscillateur radiofréquence (RF) est effectuée à l'aide d'un atténuateur pouvant être piloté de façon linéaire en amplitude.

2. Circuit pour la mise en œuvre du procédé selon la revendication 1, comprenant un coupleur divisant le signal d'oscillateur radiofréquence (RF) en deux signaux radiofréquence mutuellement déphasés de 90°, deux modulateurs à diodes, à chacun desquels sont appliqués l'un des deux signaux radiofréquence mutuellement déphasés de 90° et un signal à modulation d'impulsions en amplitude, signal qui est envoyé à travers un filtre, de même qu'un additionneur qui réunit les signaux radiofréquence modulés, sortant des modulateurs à diodes, en un seul signal, caractérisé en ce que les modulateurs à diodes sont réalisés comme des atténuateurs pouvant être pilotés de façon linéaire en amplitude, que le circuit comporte un convertisseur série/parallèle qui forme les deux signaux à modulation d'impulsions en amplitude à partir d'un signal à modulation d'impulsions en amplitude contenant un message, et que les filtres par lesquels sont envoyés les signaux à modulation d'impulsions en amplitude sont des filtres de Niquist.

FIG.1

FIG.2

0 139 033